(19) Europäisches Patentamt
European Patent Office
Office européen des brevets

(11) EP 1 970 401 B1

(12) EUROPEAN PATENT SPECIFICATION

(45) Date of publication and mention of the grant of the patent:
**13.02.2013 Bulletin 2013/07**

(21) Application number: **06843333.3**

(22) Date of filing: **26.12.2006**

(51) Int Cl.:
***C08J 5/18*** *(2006.01)* ***B32B 27/32*** *(2006.01)*
***B65D 65/40*** *(2006.01)* ***C08F 210/06*** *(2006.01)*

(86) International application number:
**PCT/JP2006/325949**

(87) International publication number:
**WO 2007/074838 (05.07.2007 Gazette 2007/27)**

(54) **MONOLAYER POLYPROPYLENE FILM AND USE THEREOF**

EINSCHICHTIGE POLYPROPYLENFOLIE UND VERWENDUNG DAVON

FILM DE POLYPROPYLENE MONOCOUCHE ET UTILISATION DE CELUI-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2005 JP 2005378197**

(43) Date of publication of application:
**17.09.2008 Bulletin 2008/38**

(73) Proprietor: **Mitsui Chemicals, Inc.**
**Tokyo 105-7117 (JP)**

(72) Inventors:
- **OKAMOTO, Masahiko**
**Sodegaura-shi,**
**Chiba 2990265 (JP)**
- **NAKAGAWA, Takashi**
**Sodegaura-shi,**
**Chiba 2990265 (JP)**
- **TOHI, Yasushi**
**Sodegaura-shi,**
**Chiba 2990265 (JP)**

(74) Representative: **HOFFMANN EITLE**
**Patent- und Rechtsanwälte**
**Arabellastrasse 4**
**81925 München (DE)**

(56) References cited:
**WO-A1-2004/046205** **JP-A- 09 012 635**
**JP-A- 11 286 584** **JP-A- 11 286 584**
**JP-A- 2004 161 957** **JP-A- 2005 314 680**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

1. FIELD OF THE INVENTION

The present invention relates to a conventionally known polypropylene-based film and its use. In more detail, it relates to a polypropylene-based monolayer film excellent in heat resistance, transparency, and low-temperature impact resistance, and a multilayer film with said film as a constituent layer.

2. DESCRIPTION OF THE RELATED ART

The industrial application fields of plastics have been more diversified and high-graded, and the application has advanced into a variety of industrial fields to which existing propylene-based resins alone cannot sufficiently respond. Among such fields, films for food containers and medical containers are required to have high heat resistance, flexibility, low-temperature impact resistance, and transparency in a balanced manner.

In recent years, retort food has rapidly been prevailing not only in household use but also in food service business, and therefore, there is a demand for development of materials for packaging (retort pouches) with which a large amount of food can be packaged at a time. Since retort foods are generally stored over a long period of time at room temperature, or in a refrigerator or a freezer, films used for the packaging materials are required to have high heat seal strength and low-temperature impact strength for preventing damage of contents in the heat-sealed part of the package. In addition, as retort foods are sterilized in an autoclave at approximately 100 to 140°C after food is packed and sealed, the heat-sealed part should have high heat resistance and heat seal strength enough to endure the treatment from the viewpoint of quality control of food. Meanwhile, sterilization at a high temperature in a short time will improve not only the work efficiency, but also the survival rate of the food in the container. Accordingly, the industry demands further improvement in the allowable temperature limit of propylene-based resin which is commonly used in a sealant layer or the like of retort pouches (see Patent Document 1).

Conventional medical containers have been made of relatively flexible soft vinyl chloride resin or ethylene/vinyl acetate copolymer resin in many cases. Medical bags made of these resins are a closed system dispensing with vent needle for intravenous drip, and therefore have an advantage in preventing contamination derived from outside air. However, medical bags made of soft vinyl chloride resin contain additives, such as a plasticizer and a stabilizer, and therefore require preventing elution thereof. Medical bags made of ethylene/vinyl acetate copolymer resin are required to be crosslinked because of poor heat resistance (see Patent Documents 2 and 3).

Patent Document 1: JP-A-H09-216640

Patent Document 2: JP-A-2005-053131

Patent Document 3: JP-A-2004-244044

JP 11-286584 concerns a resin molded product which is obtained from a polypropylene resin composition comprising (A) a polypropylene resin and (B) a propylene-ethylene-1-butene random copolymer, which is composed of 50-88 mol.% of propylene unit, 2-30 mol.% of ethylene unit and 10-40 mol.% of 1-butene unit, wherein the and 1-butene unit content is greater than ethylene unit content. The polymer is further required to have a melt flow rate (ASTM D-1238, 230 deg.C, 2.16 kg load) of 0.1-50 g/10 min and a molecular weight distribution (Mw/Mn) determined by gel permeation chromatography of <=3.

SUMMARY OF THE INVENTION

The present invention has been conducted in light of the above related art and directed to providing monolayer and multilayer polypropylene-based films excellent in all of heat resistance, transparency, flexibility, and impact resistance.

That is, the present invention relates to a polypropylene-based monolayer film of 100 to 400 $\mu$m in thickness satisfying Requirements (1) to (5) below all together,
wherein the film comprises:

(A) a propylene homopolymer or a random polypropylene, wherein the content of a unit derived from ethylene or $\alpha$-olefin is 8 mol% or less, the propylene homopolymer or random polypropylene being prepared with a Ziegler-Natta catalyst or metallocene catalyst; and
(B) a propylene copolymer prepared by copolymerization of propylene, ethylene, and a $C_{4-10}$ $\alpha$-olefin in the presence

of a polymerization catalyst containing a metallocene compound represented by general formula [I] below:

[Formula 1]

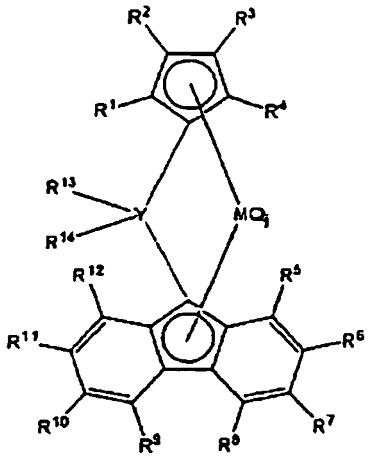

(In general formula [I], $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ may be the same as or different from each other and are each selected from a hydrogen atom, hydrocarbon groups, and silicon-containing groups. M is a Group-4 transition metal, Y is a carbon or silicon atom, Q is selected from halogen atoms, hydrocarbon groups, anionic ligands, and neutral ligands capable of coordinating via a lone pair and may be the same or a combination of different groups, and j is an integer of 1 to 4).

(1) The Young's modulus measured in accordance with JIS K6781 is 500 MPa or less.
(2) The tensile impact strength measured at 0°C is 100 to 1000 kJ/$m^2$.
(3) The light transmittance is 85 to 99%, and the reduction rate of light transmittance after hot-water treatment at 120°C for 30 minutes is less than 15% of the light transmittance before the treatment.
(4) The film is composed of 5 to 60 wt% of a component soluble in n-decane at room temperature ($D_{sol}$) and 40 to 95 wt% of a component insoluble in n-decane at room temperature ($D_{insol}$).
(5) The component soluble in n-decane at room temperature ($D_{sol}$) is composed of 50 to 80 mol% of propylene-derived unit ($S_P$), 10 to 45 mol% of ethylene-derived unit ($S_E$), and 2.0 to 15 mol% of $C_{4-10}$ $\alpha$-olefin-derived unit ($S_\alpha$) provided that $S_P + S_E + S_\alpha$ = 100 mol%.

The polypropylene-based monolayer film of the present invention preferably satisfies, in addition to Requirements (1) to (5), the requirement that the component soluble in n-decane at room temperature ($D_{sol}$) has an intrinsic viscosity of 2.0 to 4.0 (dl/g) (hereafter, simply called "Requirement (6)").

The polypropylene-based monolayer film of the present invention is preferably formed by an inflation or extrusion method.

The present invention relates to a multilayer film comprising a base layer and an outer layer on at least one surface of the base layer, the base layer comprising the polypropylene-based monolayer film, the outer layer comprising a polyolefin-based resin.

The present invention relates to food containers comprising the above polypropylene-based film.

The present invention relates to medical containers comprising the above polypropylene-based film.

The food containers of the present invention are preferably food containers usable for high-temperature sterilization.

The medical containers of the present invention are preferably medical containers usable for high-temperature sterilization.

The present invention relates to a process for producing a retort food package, comprising packaging food in the above food container and sterilizing the food at a high temperature.

The present invention relates to a process for producing a medical package, comprising packaging a medicine in the above medical container and sterilizing the medicine at a high temperature.

DETAILED DESCRIPTION OF THE PREFERRED EMBODIMENTS

The polypropylene-based film of the present invention does not suffer from deterioration of transparency after

high-temperature sterilization, and it is excellent in low-temperature impact resistance and flexibility.

The polypropylene-based transparent film of the present invention is specifically described below.

The polypropylene-based monolayer film of the present invention satisfies Requirements (1) to (5), which will be described in detail below, all together. The polypropylene-based monolayer film preferably satisfies. Requirements (6) along with Requirements (1) to (5).

The thickness of the monolayer film is 100 to 400 $\mu$m, preferably 150 to 350 $\mu$m, and more preferably 200 to 300 $\mu$m. This thickness is preferable because the film satisfying Requirements (1) to (5) all together can be formed in a stable manner.

Requirement (1)

In the polypropylene-based monolayer film of the present invention, the Young's modulus measured in accordance with JIS K6781 is 500 MPa or less, preferably 10 to 400 MPa. It is not preferable that the Young's modulus is out of this range, because the film often fails to maintain flexibility corresponding to Young's modulus not more than 500 MPa before and after retort treatment (pressurized hot-water sterilization).

Requirement (2)

In the polypropylene-based monolayer film of the present invention, the tensile impact strength measured at 0°C is 100 to 1000 kJ/$m^2$, and preferably 100 to 800 kJ/$m^2$. With the tensile impact strength being less than 100 kJ/$m^2$, dropping a container made of the propylene monolayer film that has been stored at a low temperature can result in leakage of the food or medicine from the container. On the other hand, there are a lot of difficulties in economical production of a film that has a tensile impact strength over 1000 kJ/$m^2$ and also satisfies the other requirements necessary for the polypropylene-based monolayer film of the present invention. Therefore, it is not preferred that the tensile impact strength be outside the above range.

Requirement (3)

The light transmittance of the polypropylene-based monolayer film of the present invention is 85 to 99%, preferably 85 to 95%, and the reduction rate of light transmittance after hot-water treatment at 120°C for 30 minutes is less than 15%, preferably less than 10%, of the light transmittance before the treatment. When the light transmittance is less than 85%, it may be difficult to identify the contents by visual examination from the outside of container for some types of contents. Meanwhile, it is not practical to produce a film that has a light transmittance over 99% and also satisfies all the other requirements necessary for the polypropylene-based monolayer film of the present invention. When the reduction rate of light transmittance is not less than 15% after hot-water treatment, the transparency will be significantly deteriorated after high-temperature sterilization at 121°C.

Reduction rate of light transmittance (%) = (transmittance before thermal treatment - transmittance after thermal treatment) X 100 / transmittance before thermal treatment

Requirement (4)

The polypropylene-based monolayer film of the present invention is composed of a component soluble in n-decane at room temperature ($D_{sol}$) in an amount of 5 to 60 wt%, preferably 10 to 60 wt%, more preferably 15 to 55 wt%, and a component insoluble in n-decane at room temperature ($D_{insol}$) in an amount of 40 to 95 wt%, preferably 40 to 90 wt%, more preferably 45 to 85 wt% (provided that the total of $D_{sol}$ and $D_{insol}$ is 100 wt%). When this requirement is met, the polypropylene-based monolayer film is excellent in heat resistance, transparency, low-temperature impact strength, and flexibility, and especially excellent in the balance between low-temperature impact strength and transparency.

Requirement (5)

In the component soluble in n-decane at room temperature ($D_{sol}$) of the polypropylene-based monolayer film

of the present invention, the content of propylene-derived unit ($S_P$) is preferably 50 to 80 mol% and more preferably 55 to 80 mol%, the content of ethylene-derived unit ($S_E$) is 10 to 45 mol% and preferably 12 to 40 mol%, and the content of $C_{4-10}$ $\alpha$-olefin-derived unit ($S_\alpha$) is preferably 2.0 to 15 mol% and more preferably 2.0 to 13 mol%, provided that $S_P + S_E + S_\alpha = 100$ mol%. When $D_{sol}$ contains the propylene-derived constitutional unit, ethylene-derived constitutional unit, and $C_{4-10}$ $\alpha$-olefin-derived constitutional unit at a ratio in the above range, the polypropylene-based monolayer film tends to have sufficient transparency, flexibility, mechanical strength, heat resistance, and impact resistance.

Requirement (6)

In the polypropylene-based monolayer film of the present invention, the intrinsic viscosity [$\eta$] of the component soluble in n-decane at room temperature ($D_{sol}$) is preferably 2.0 to 4.0 (dl/g), more preferably 2.0 to 3.5, and especially preferably 2.0 to 3.2 (dl/g). When the intrinsic viscosity [$\eta$] of $D_{sol}$ falls within the range, the polypropylene-based monolayer film is excellent in heat resistance, transparency, low-temperature impact resistance, and flexibility, and especially excellent in the balance between low-temperature impact resistance and transparency.

Polypropylene Film

Hereinafter, the process of producing a typical monolayer film, which was used in Examples of the present application described later, will be described. The propylene-based resin composition used in the present invention is prepared by physical blending or reactor blending of
a propylene homopolymer or a random polypropylene, wherein the content of a unit derived from ethylene or $\alpha$-olefin is 8 mol% or less, preferably 6 mol% or less, the propylene homopolymer or random polypropylene being prepared with a common Ziegler-Natta catalyst or metallocene catalyst (hereafter, these polymers may be called simply "propylene polymer (A)"); a propylene copolymer (B) prepared by copolymerization of propylene, ethylene, and a $C_{4-10}$ $\alpha$-olefin in the presence of a polymerization catalyst containing a metallocene compound represented by general formula [I] below, which is described in WO 2005/019283 filed by the present applicant ; and, if necessary, an ethylene copolymer (C) prepared by copolymerization of ethylene and a $C_{4-10}$ $\alpha$-olefin with a common Ziegler-Natta catalyst or metallocene catalyst. In Examples of the present invention, diphenylmethylene(3-tert-butyl-5-ethylcyclopentadienyl) (2, 7-di-tert-butylfluorenyl) zirconium dichloride was used as the metallocene compound represented by general formula [I].

[Formula 1]

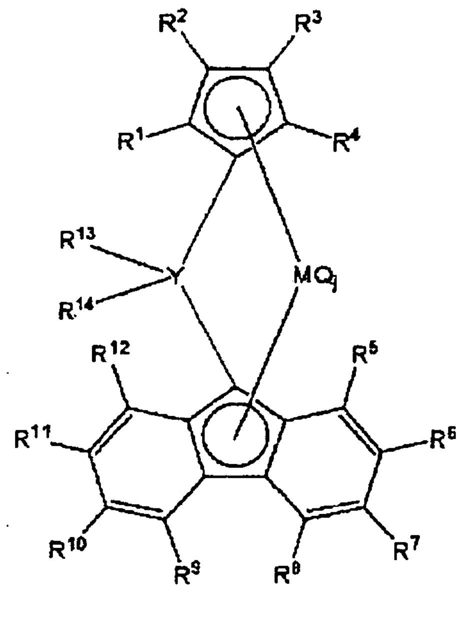

--------- [I]

(In general formula [I], $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ may be the same as or different from each other and are each selected from a hydrogen atom, hydrocarbon groups, and silicon-containing groups. M is a Group-4 transition metal, Y is a carbon or silicon atom, Q is selected from halogen atoms, hydrocarbon groups, anionic ligands, and neutral ligands capable of coordinating via a lone pair and may be the same or a combination of different groups, and j is an integer of 1 to 4.)

The polypropylene polymer (A), propylene copolymer (B), and ethylene copolymer (C), which is optionally used as necessary, prepared as mentioned above are blended with additives of every kind if necessary, such as an antioxidant, an ultraviolet absorber, an antistatic agent, a nucleating agent, a lubricant, a flame retardant, an antiblocking agent, a colorant, an inorganic or organic filler, and a synthetic resin. The combined materials are melt-kneaded and pelletized to make pellets. The pellets are formed into the polypropylene-based monolayer film of the present invention by extrusion or inflation.

A preferable forming method is an inflation method or a (co) extrusion T-die method from hygienic and economic points of view.

That is, the film is prepared by the inflation method in which the above pellets are melt-extruded with an extruder and a circular die, extruded through a spiral or slit die, and inflated at a predetermined air flow. The cooling methods include water-cooling and air-cooling.

The conditions for water-cooling inflation are not particularly restricted, but the forming temperature is preferably 190 to 280°C and the water temperature during water-cooling is preferably 10 to 60°C.

The film is also formed by the extrusion method in which the above pellets are melt-extruded with an extruder and a circular die, extruded through a coat-hanger die and a T-die, and cooled. A multilayer film is prepared, for example, by a multilayer T-die method, dry lamination, extrusion lamination, or the like. Although the forming conditions are not particularly restricted, the forming temperature is preferably 190 to 280°C and the cooling temperature of a chill roll is preferably 10 to 80°C.

As mentioned above, the polypropylene-based monolayer film of the present invention is not only used as a monolayer film but also suitably used in a multilayered film prepared by co-extrusion. The present invention also includes such a co-extruded multilayer film in which the base layer is the polypropylene-based monolayer film and outer layer (s) made of polyolefin-based resin is (are) laminated onto at least one surface of the base layer. A preferred embodiment of the multilayer film is a three-layered film composed of the above polypropylene monolayer film of the present invention, on both sides of which there is laminated a film of 10 to 50 μm, preferably 15 to 40 μm, in thickness made of polypropylene or random polypropylene containing the unit derived from ethylene or α-olefin in an amount of 8 mol% or less, preferably 6 mol% or less. This three-layered film is suitably applied to uses described below.

The multilayer film may be composed of four or more layers. Although not particularly specified, when the multilayer film has a thickness of 250 μm, the thickness of the polypropylene monolayer film of the present invention is preferably 150 μm or more. With this thickness, the film is excellent in the balance among flexibility, transparency and impact resistance. The constituent layers include a gas barrier layer, an adhesive layer, and the like. For the gas barrier layer, PET, EVOH, cycloolefin polymers, and vapor-deposited aluminum are preferably used. For the adhesive layer, polar group-containing olefin polymers (ADMER) are suitably used. In producing a food container or medicine container using the monolayer or multilayer film of the present invention prepared in the above method, the tubular or sheet-shaped film prepared by the above forming method is cut and heat-sealed by the common method, and an opening member or the like is attached to the container body by means of heat-sealing or the like, thereby producing a container in a predetermined shape and size. The temperature for heat-sealing of the film is generally about 120 to 180°C, although dependent on the film thickness. It is preferable that the opening member be composed of a film of linear low density polyethylene or an ethylene/α-olefin copolymer-based resin, because such film is easily welded to the inner layer of the film of the present invention.

## EXAMPLES

The present invention will be described more specifically with Examples below, but the present invention is not restricted to these Examples.

The analytical methods employed in the present invention are as follows.

[m1] Content of component soluble in n-decane at room temperature ($D_{sol}$)

To the monolayer film (20 cm x 20 cm) of the present invention, 200 mL of n-decane was added, and the film was dissolved by heating at 145°C for 30 minutes. The solution was cooled to 20°C in approximately 3 hours and let stand for 30 minutes. The resultant precipitate (hereafter called n-decane-insoluble component, $D_{insol}$) was filtered off. The filtrate was poured into acetone in about 3 times volume of the filtrate to precipitate the component dissolved in n-decane. The mixture was filtered to separate precipitate (A) from acetone, and the precipitate was dried. Although the filtrate was concentrated to drying, no residue was found. The content of n-decane-soluble component was obtained by the following equation:

$$\text{Content of n-decane-soluble component (wt\%)} = \{\text{weight of precipitate (A)}/\text{weight of sample}\} \times 100$$

[m2] Molecular weight distribution (Mw/Mn) [weight-average molecular weight (Mw), number-average molecular weight (Mn)]

Measurement was carried out using GPC-150C Plus manufactured by Waters as follows. The separation columns were TSKgel GMH6-HT and TSKgel GMH6-HTL, each sized 7.5 mm in inside diameter and 600 mm in length, the column temperature was 140°C, the mobile phase was o-dichlorobenzene (Wako Pure Chemical Industries, Ltd.) containing 0.025 wt% of BHT (Wako Pure Chemical Industries, Ltd.) as an antioxidant, the flow rate was 1.0 mL/min, the sample concentration was 0.1 wt%, the injection volume of sample was 500 $\mu$L, and the detector used was a differential refractometer. Standard polystyrenes manufactured by Tosoh Corporation were used for the molecular weight range of Mw < 1,000 and Mw > $4 \times 10^6$, and those manufactured by Pressure Chemical Company were used for the molecular weight range of $1,000 \leq Mw \leq 4 \times 10^6$. The conversion to PP was based on a universal calibration method. The Mark-Houwink coefficients of PS and PP were quoted from the values in J. Polym. Sci., Part A-2, 8, 1803 (1970) and Makromol. Chem., 177, 213 (1976), respectively.

[m3] Melting Point (Tm)

Measurement was carried out with a differential scanning calorimeter (DSC, manufactured by PerkinElmer, Inc.). Here, the endothermic peak in the third step was defined as the melting point (Tm).

(Measurement Conditions)

The first step: The temperature was raised to 240°C at 10°C/min and maintained constant for 10 minutes.
The second step: The temperature was lowered to 60°C at 10°C/min.
The third step: The temperature was raised to 240°C at 10°C/min.

[m4] Intrinsic viscosity [$\eta$]

Measurement was carried out at 135°C using decalin as a solvent. In 15 mL of decalin was dissolved 1 $cm^2$ of the polypropylene-based monolayer film of the present invention, and the specific viscosity $\eta_{sp}$ was measured in an oil bath at 135°C. This solution was diluted by adding 5 mL of decalin, and the specific viscosity $\eta_{sp}$ was measured in the same way. The dilution procedure was repeated two more times, and the extrapolated value of $\eta_{sp}/C$ at the concentration (C) approaching 0 was determined as the intrinsic viscosity.

$$[\eta] = \lim(\eta_{sp}/C) \quad (C \rightarrow 0)$$

[m5] Content of propylene-derived unit ($S_P$), content of ethylene-derived unit ($S_E$), and content of $C_{4-10}$ $\alpha$-olefin-derived unit ($S_\alpha$) in $D_{sol}$

About 1 $cm^2$ of the polypropylene-based monolayer film of the present invention was dissolved in 0.6 mL of 1,2,4-trichlorobenzene/benzene-$d_6$ (2:1) solution, and the carbon nuclear magnetic resonance ($^{13}$C-NMR) spectrum was measured. The contents of propylene, ethylene, and $\alpha$-olefin were quantified based on the dyad distribution. In the case of propylene/ethylene copolymer, for instance, equations (Eq-1) and (Eq-2) below were used together with the relations $PP=S\alpha\alpha$, $EP=S\alpha\gamma+S\alpha\beta$, and $EE=(S\beta\delta+S\delta\delta)/2+S\gamma\delta/4$.

$$\text{propylene(mol\%)} = [(PP+(EP/2)] \times 100/\{[PP+(EP/2)]+[(EP/2)+EE]\}$$

$$\text{ethylene(mol\%)} = ([(EP/2)+EE] \times 100/\{[PP+(EP/2)]+[(EP/2)+EE]\}$$

[m6] MFR (melt flow rate)

MFR was measured in accordance with ASTM D1238 (230°C, 2.16 kg of loading)

[m7] Young's modulus of film (=tensile elastic modulus)

The Young's modulus of the film was measured in accordance with JIS K 6781.

<Test conditions>

Temperature: 23°C
Tensile speed: 30 mm/min
Distance between chucks: 30 mm

[m8] Tensile impact strength of film

The film was heat-sealed at 200/190°C (upper limit/lower limit) under 0.2 MPa for 5 seconds with the seal width of 150 mm x 20 mm using heat-seal testing machine TP-701-B manufactured by Tester Sangyo Co., Ltd. to prepare a test sample.
The above sample was cut into rectangular shape of 10 mmt in accordance with JIS K7160 to make a specimen. Tensile impact test was carried out at a hammer lift angle of 149.2° at an impact speed of 3.0 m/sec using universal impact test machine 258 manufactured by Yasuda Seiki Seisakusho, Ltd.

[m9] Light transmittance of film

Measurement was carried out in accordance with JIS K7136 using benzyl alcohol as a solvent. After the film was annealed with hot water at 120°C in an autoclave for 30 minutes, the measurement was carried out in the same way, and the reduction rate of light transmittance was calculated.
Examples will be described in detail below.

[Polymerization Example 1] Synthesis of

propylene/ethylene/butene copolymer (B-1)

A 4-L polymerization reactor, which had been fully purged with nitrogen, was charged with 1834 mL of dry hexane, 110 g of 1-butene, and triisobutylaluminum (1.0 mmol) at room temperature. The inside temperature of the polymerization reactor was raised to 55°C, propylene was supplied so that the inner pressure of the system was 0.58 MPa, and then ethylene was supplied so as to adjust the inner pressure to 0.75 MPa. To the polymerization reactor was added a toluene solution in which 0.001 mmol of diphenylmethylene(3-tert-butyl-5-ethylcyclopentadienyl) (2, 7-di-tert-butylfluorenyl) and 0.3 mmol (in terms of aluminum) of methylaluminoxane (Tosoh Finechem Corporation) were contacted. Polymerization was performed for 25 minutes while the inside temperature was kept at 55°C and ethylene was supplied so that the inner pressure of the system was kept at 0.75 MPa. To terminate the polymerization, 20 mL of methanol was then added. After releasing the pressure, the polymerization solution was poured into 4 L of methanol to precipitate the polymer, which was dried at 130°C under vacuum for 12 hours. The resultant polymer weighed 120.2 g. In this polymer (B-1), [$\eta$] was 2.6 (dl/g), Mw/Mn was 2.1, the content of propylene-derived unit was 74.9 mol%, the content of ethylene-derived unit was 18.5 mol%, and the content of butene-derived unit was 6.6 mol%. The physical properties including other properties are shown in Table 1. The above procedure was repeated until a required amount of the polymer was obtained. The polymer was melt-kneaded and used for Examples described below.

EXAMPLE 1

A composition contained 37.5 parts by weight of propylene polymer (A-1) (MFR = 7.3) with the properties shown in Table 1, 37.5 parts by weight of propylene polymer (A-2) (MFR = 0.5) shown in Table 1, 25 parts by weight of propylene/ethylene/butene copolymer (B-1) prepared in Polymerization Example 1 (100 parts by weight in total), and 25 parts by weight of ethylene/butene copolymer (C-1). To the composition were added 0.1 part by weight of tris(2,4-di-tert-butylphenyl) phosphate as a secondary antioxidant, 0.1 part by weight of n-octadecyl 3- (4'-hydroxy-3',5'-di-tert-butylphenyl)

propionate as a heat resistant stabilizer, and 0.05 part by weight of calcium stearate as a hydrochloric acid absorber. The mixture was kneaded with twin-screw extruder BT-30 manufactured by Plabor Co., Ltd. (30 mm, L/D = 46, rotating in the same direction) at a preset temperature of 200°C at a resin extrusion output of 60 g/min at a rotation of 200 rpm to prepare pellets.

The resultant pellets were extruded by using a single-screw extruder (20 mm in diameter, L/D = 28, manufactured by Therm Co. Ltd.) equipped with a T-die having a diameter of 25 mm and a lip width of 250 mm x 2.0 mm, at a processing temperature of 210°C, at a roll temperature of 40°C at a winding speed of 0.63 m/min to give a film of 250 μm in thickness.

In the monolayer film, the mean thickness was 250 μm, the Young's modulus was 180 MPa, the strength at break was 50 MPa, the tensile impact strength was 200 kJ/$m^2$, the light transmittance was 92%, and the light transmittance after hot-water treatment at 120°C for 30 minutes was 84%, and hence the reduction rate was 8.7%. In the monolayer film, it was found that the component soluble in decane at room temperature ($D_{sol}$) accounted for 24 wt% and the component insoluble in decane at room temperature ($D_{insol}$) 76 wt%. For the component soluble in decane at room temperature ($D_{sol}$), the intrinsic viscosity was 2.7 dl/g, the content of propylene-derived unit ($S_P$) was 56.1 mol%, the content of ethylene-derived unit ($S_E$) was 36.9 mol%, and the content of 1-butene-derived unit ($S_\alpha$) was 7.0 mol%. These results are shown in Table 2.

EXAMPLE 2

A composition contained 30 parts by weight of propylene polymer (A-1) (MFR = 7.3) with the properties shown in Table 1, 30 parts by weight of propylene polymer (A-2) (MFR = 0.5) with the properties shown in Table 1, and 40 parts by weight of propylene/ethylene/butene copolymer (B-1) prepared in Polymerization Example 1 (100 parts by weight in total). To the composition were added the same secondary antioxidant, heat resistant stabilizer, and hydrochloric acid absorber in the same amounts as in EXAMPLE 1. The mixture was kneaded under the same extrusion conditions to give pellets.

The resultant pellets were extruded by using a single-screw extruder (20 mm in diameter, L/D = 28, manufactured by Therm Co., Ltd.) equipped with a T-die having a diameter of 25 mm and a lip width of 250 mm x 2.0 mm, at a processing temperature of 210°C at a roll temperature of 40°C at a winding speed of 0.63 m/min to give a film of 250 μm in thickness.

In the monolayer film, the mean thickness was 250 μm, the Young's modulus was 160 MPa, the strength at break was 37 MPa, the tensile impact strength was 190 kJ/$m^2$, the light transmittance was 96%, and the light transmittance after hot-water treatment at 120°C for 30 minutes was 91%, and hence the reduction rate was 5.2%. In the monolayer film, it was found that the component soluble in decane at room temperature ($D_{sol}$) accounted for 40 wt% and the component insoluble in decane at room temperature ($D_{insol}$) 60 wt%. For the component soluble in decane at room temperature ($D_{sol}$), the intrinsic viscosity was 2.6 dl/g, the content of propylene-derived unit ($S_P$) was 74.9 mol%, the content of ethylene-derived unit ($S_E$) was 18.5 mol%, and the content of 1-butene-derived unit ($S_\alpha$) was 6.6 mol%.

EXAMPLE 3

A composition contained 25 parts by weight of propylene polymer (A-1) (MFR = 7.3) with the properties shown in Table 1, 25 parts by weight of propylene polymer (A-2) (MFR = 0.5) with the properties shown in Table 1, 50 parts by weight of the propylene/ethylene/butene copolymer (B-1) prepared in Polymerization Example 1 (100 parts by weight in total), and 25 parts by weight of ethylene/butene copolymer (C-1). To the composition were added the same secondary antioxidant, heat resistant stabilizer, and hydrochloric acid absorber in the same amounts as in EXAMPLE 1. The mixture was kneaded under the same extrusion conditions to give pellets.

The resultant pellets were extruded by using a single-screw extruder (20 mm in diameter, L/D = 28, manufactured by Therm Co., Ltd.) equipped with a T-die having a diameter of 25 mm and a lip width of 250 mm x 2.0 mm, at a processing temperature of 210°C, at a roll temperature of 40°C at a winding speed of 0.63 m/min to give a film of 250 μm in thickness.

In the monolayer film, the mean thickness was 250 μm, the Young's modulus was 100 MPa, the strength at break was 46 MPa, the tensile impact strength was 260 kJ/$m^2$, the light transmittance was 92%, and the light transmittance after hot-water treatment at 120°C for 30 minutes was 88%, and hence the reduction rate was 4.3%. In the monolayer film, it was found that the component soluble in decane at room temperature ($D_{sol}$) accounted for 47 wt% and the component insoluble in decane at room temperature ($D_{insol}$) 53 wt%. For the component soluble in decane at room temperature ($D_{sol}$), the intrinsic viscosity was 2.5 dl/g, the content of propylene-derived unit ($S_P$) was 61.5 mol%, the content of ethylene-derived unit ($S_E$) was 30.6 mol%, and the content of 1-butene-derived unit ($S_\alpha$) was 7.9 mol%.

COMPARATIVE EXAMPLE 1

Propylene polymer (A-1) (MFR = 7.3) with the properties shown in Table 1 was extruded by using a single-screw extruder (20 mm in diameter, L/D = 28, manufactured by Therm Co., Ltd.) equipped with a T-die having a diameter

of 25 mm and a lip width of 250 mm x 2.0 mm, at a processing temperature of 210°C, at a roll temperature of 40°C at a winding speed of 0.63 m/min to give a film of 250 μm in thickness.

In the monolayer film, the mean thickness was 250 μm, the Young's modulus was 800 MPa, the tensile impact strength was 30 kJ/$m^2$, the light transmittance was 85%, and the light transmittance after hot-water treatment at 120°C for 30 minutes was 81%, and hence the reduction rate was 4.7%. In the monolayer film, it was found that the component soluble in decane at room temperature ($D_{sol}$) accounted for 2 wt% and the component insoluble in decane at room temperature ($D_{insol}$) 98 wt%.

[Table 1]

| | | | Propylene Polymer | | Propylene Copolymer | Ethylene Copolymer |
|---|---|---|---|---|---|---|
| | | | (A-1) | (A-2) | (B-1) | (C-1) |
| Composition | (a) Propylene unit | (mol%) | 95.2 | 93.4 | 74.9 | 0.0 |
| | (b) Ethylene unit | (mol%) | 3.3 | 6.6 | 18.5 | 85.5 |
| | (c) α-olefin unit | (mol%) | 1.5 | 0.0 | 6.6 | 14.5 |
| MFR | | (g/10 min) | 7.3 | 0.5 | - | - |
| [η] | | | | | 2.6 | 3.0 |
| Mw/Mn | | | - | - | 2.1 | - |
| Melting Point Tm | | (°C) | 138.5 | 137.2 | - | 56.1 |
| ΔH | | (mJ/mg) | 76 | 65 | - | 37 |
| Tg | | (°C) | - | - | -30.0 | -51.8 |

[Table 2]

| | | | Example | | | Comparative Example |
|---|---|---|---|---|---|---|
| | | | 1 | 2 | 3 | 1 |
| Polymer (A) | | | (A-1)/(A-2) | (A-1)/(A-2) | (A-1)/(A-2) | (A-1) |
| Copolymer (B) or (C) | | | (B-1)/(C-1) | (B-1) | (B-1)/(C-1) | - |
| (A)/(B) or (C) composition ratio (wt%) | | | 37.5/37.5/25/25 . | 30/30/40 | 25/25/50/25 | 100 |
| Tensile elastic modulus | | (MPa) | 180 | 160 | 100 | 800 |
| Tensile impact strength | | (kJ/$m^2$) | 200 | 190 | 260 | 30 |
| Light transmittance | | (%) | 92 | 96 | 92 | 85 |
| Light transmittance after heat treatment | | (%) | 84 | 91 | 88 | 81 |
| Content of decane soluble component | | (%) | 24 | 40 | 47 | 2 |
| [η] of decane soluble component | | (dl/g) | 2.7 | 2.6 | 2.5 | - |
| Decane Soluble Component | (a) Propylene unit | (mol%) | 56.1 | 74.9 | 61.5 | - |
| | (b) Ethylene unit | (mol%) | 36.9 | 18.5 | 30.6 | - |
| | (c) α-olefin unit | (mol%) | 7.0 | 6.6 | 7.9 | - |

The polypropylene-based film does not suffer from deterioration in transparency even after high-temperature sterilization treatment and is excellent in low-temperature impact resistance and flexibility, and is useful in the fields of food packaging and medical packaging.

## Claims

1. A polypropylene-based monolayer film of 100 to 400 $\mu$m in thickness satisfying Requirements (1) to (4) below all together:

   (1) the Young's modulus measured in accordance with JIS K6781 is 500 MPa or less;
   (2) the tensile impact strength measured at 0°C is 100 to 1000 kJ/$m^2$;
   (3) the light transmittance is 85 to 99%, and the reduction rate of light transmittance after hot-water treatment at 120°C for 30 minutes is less than 15% of the light transmittance before the treatment; and
   (4) the film is composed of 5 to 60 wt% of a component soluble in n-decane at room temperature ($D_{sol}$) and 40 to 95 wt% of a component insoluble in n-decane at room temperature ($D_{insol}$) ;
   wherein the film comprises:

   (A) a propylene homopolymer or a random polypropylene, wherein the content of a unit derived from ethylene or $\alpha$-olefin is 8 mol% or less, the propylene homopolymer or random polypropylene being prepared with a Ziegler-Natta catalyst or metallocene catalyst; and
   (B) a propylene copolymer prepared by copolymerization of propylene, ethylene, and a $C_{4-10}$ $\alpha$-olefin in the presence of a polymerization catalyst containing a metallocene compound represented by general formula [I] below:

[Formula 1]

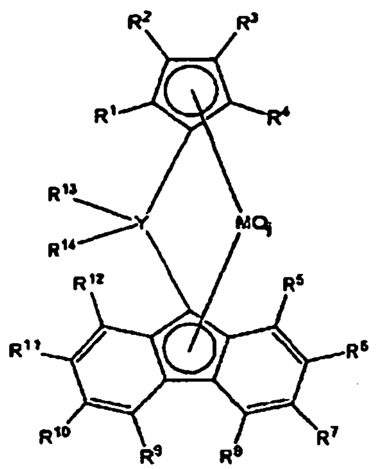

   (In general formula [I], $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ may be the same as or different from each other and are each selected from a hydrogen atom, hydrocarbon groups, and silicon-containing groups. M is a Group-4 transition metal, Y is a carbon or silicon atom, Q is selected from halogen atoms, hydrocarbon groups, anionic ligands, and neutral ligands capable of coordinating via a lone pair and may be the same or a combination of different groups, and j is an integer of 1 to 4);
   wherein the component soluble in n-decane at room temperature ($D_{sol}$) is composed of 50 to 80 mol% of propylene-derived unit ($S_p$), 10 to 45 mol% of ethylene-derived unit ($S_E$), and 2.0 to 15 mol% of unit derived from an $\alpha$-olefin having 4 to 10 carbon atoms ($S_\alpha$), provided that Sp + $S_E$ + $S_\alpha$= 100 mol%.

2. The polypropylene-based monolayer film according to claim 1, wherein the component soluble in n-decane at room temperature ($D_{sol}$) has an intrinsic viscosity of 2.0 to 4.0 dl/g.

3. The polypropylene-based monolayer film according to any of claims 1 or 2, wherein the film is formed by an inflation

or extrusion method.

4. A multilayer film comprising a base layer and an outer layer on at least one surface of the base layer, the base layer comprising the polypropylene-based monolayer film according to any of claims 1 to 3, the outer layer comprising a polyolefin-based resin.

5. A food container comprising the polypropylene-based film according to any of claims 1 to 4.

6. A medical container comprising the polypropylene-based film according to any of claims 1 to 4.

7. The food container according to claim 5 that is a food container usable for high-temperature sterilization.

8. The medical container according to claim 6 that is a medical container usable for high-temperature sterilization.

9. A process of producing a retort food package, comprising packaging food in the food container according to claim 5 or 7 and sterilizing the food at a high temperature.

10. A process of producing a medical package, comprising packaging a medicine in the medical container according to claim 6 or 8 and sterilizing the medicine at a high temperature.

## Patentansprüche

1. Einschicht-Folie auf Polyproplyenbasis mit 100 bis 400 μm Dicke, die alle der folgenden Anforderungen (1) bis (4) gemeinsam erfüllt:

   (1) der gemäß JIS K6781 gemessene Elastizitätsmodul ist 500 MPa oder weniger;
   (2) die bei 0°C gemessene Zug-Schlagzähigkeit ist 100 bis 1.000 kJ/$m^2$;
   (3) die Lichtdurchlässigkeit ist 85 bis 99 % und die Reduktionsrate der Lichtdurchlässigkeit nach Heißwasserbehandlung bei 120°C über 30 Minuten ist weniger als 15 % der Lichtdurchlässigkeit vor der Behandlung; und
   (4) die Folie ist aus 5 bis 60 Gew.% einer bei Raumtemperatur in n-Decan löslichen Komponente ($D_{sol}$) und 40 bis 95 Gew.% einer bei Raumtemperatur in n-Decan unlöslichen Komponenten ($D_{insol}$) aufgebaut;
   worin die Folie umfasst:

   (A) ein Propylenhomopolymer oder ein Zufallspolypropylen, in dem der Gehalt einer von Ethylen oder α-Olefin abgeleiteten Einheit 8 Mol% oder weniger ist, worin das Propylenhomopolymer oder Zufallspropropylen mit einem Ziegler-Natta-Katalysator oder Metallocenkatalysator hergestellt ist; und
   (B) ein Propylencopolymer, das durch Copolymerisation von Propylen, Ethylen und einem $C_{4-10}$-α-Olefin in Gegenwart eines Polymerisationskatalysators hergestellt ist, der eine Metallocenverbindung der folgenden allgemeinen Formel (I) enthält:

[Formel 1]

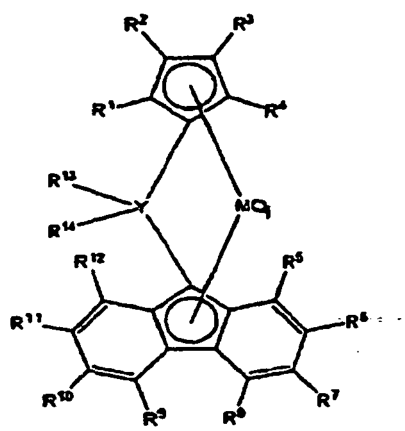

(In der allgemeinen Formel [I] können $R^1$, $R^2$, $R^3$, $R^4$, $R^5$, $R^6$, $R^7$, $R^8$, $R^9$, $R^{10}$, $R^{11}$, $R^{12}$, $R^{13}$ und $R^{14}$ gleich oder unterschiedlich sein und sind jeweils aus einem Wasserstoffatom, Kohlenwasserstoffgruppen und Silizium enthaltenden Gruppen ausgewählt, M ist ein Übergangsmetall der Gruppe 4, Y ist ein Kohlenstoff- oder Siliziumatom, Q ist aus Halogenatomen, Kohlenwasserstoffgruppen, anionischen Liganden und neutralen Liganden, die über ein einsames Elektronenpaar koordinieren können, ausgewählt und kann gleich oder eine Kombination verschiedener Gruppen sein, und j ist eine ganze Zahl von 1 bis 4);

worin die bei Raumtemperatur in n-Decan lösliche Komponente ($D_{sol}$) aus 50 bis 80 Mol% einer von Polypropylen abgeleiteten Einheit ($S_p$), 10 bis 45 mol% einer von Ethylen abgeleiteten Einheit ($S_E$) und 2,0 bis 15 Mol% einer von einem $\alpha$-Olefin mit 4 bis 10 Kohlenstoffatomen abgeleitete Einheit ($S_\alpha$) aufgebaut ist, vorausgesetzt, dass es $Sp + S_E + S_\alpha = 100$ Mol%.

2. Einschichtfolie auf Polypropylenbasis gemäß Anspruch 1, worin die bei Raumtemperatur in n-Decan lösliche Komponente ($D_{sol}$) eine intrinsische Viskosität von 2,0 bis 4,0 dl/g hat.

3. Einschichtfolie auf Polypropylenbasis gemäß irgendeinem der Ansprüche 1 oder 2, worin die Folie durch ein Blas- oder Extrusionsverfahren gebildet wird.

4. Mehrschichtfolie, die eine Basisschicht und eine äußere Schicht auf mindestens einer Oberfläche der Basisschicht umfasst, worin die Basisschicht die Einschichtfolie auf Polypropylenbasis gemäß irgendeinem der Ansprüche 1 bis 3 umfasst und die äußere Schicht ein Harz auf Polyolefinbasis umfasst.

5. Lebensmittelbehälter, der die Folie auf Polypropylenbasis gemäß irgendeinem der Ansprüche 1 bis 4 umfasst.

6. Medizinischer Behälter, der die Folie auf Propylenbasis gemäß irgendeinem der Ansprüche 1 bis 4 umfasst.

7. Lebensmittelbehälter gemäß Anspruch 5, der ein für Hochtemperatur-Sterilisierung verwendbarer Lebensmittelbehälter ist.

8. Medizinischer Behälter gemäß Anspruch 6, der ein für Hochtemperatur-Sterilisierung verwendbarer medizinischer Behälter ist.

9. Verfahren zur Herstellung eines verpackten Fertiglebensmittels, das das Verpacken von Lebensmitteln in dem Lebensmittelbehälter gemäß Anspruch 5 oder Anspruch 7 und das Sterilisieren des Lebensmittels bei hoher Temperatur umfasst.

10. Verfahren zur Herstellung eines verpackten Medikaments, das das Verpacken eines Medikaments in den medizinischen Behälter gemäß Anspruch 6 oder 8 das und das Sterilisieren des Medikaments bei hoher Temperatur umfasst.

## Revendications

1. Film monocouche à base de polypropylène présentant une épaisseur allant de 100 à 400 $\mu$m qui remplit toutes les conditions (1) à (4) ci-dessous :

(1) le module de Young mesuré selon la norme JIS K6781 est de 500 MPa ou moins ;
(2) la résistance à la traction par choc mesurée à 0°C est de 100 à 1 000 kJ/$m^2$ ;
(3) la transmission lumineuse est de 85 à 99 %, et le taux de réduction de la transmission lumineuse après un traitement à l'eau chaude à 120°C pendant 30 minutes est inférieur à 15 % de la transmission lumineuse avant le traitement ; et
(4) le film est composé de 5 à 60 % en poids d'un composant soluble dans du n-décane à température ambiante ($D_{sol}$) et de 40 à 95 % en poids d'un composant insoluble dans du n-décane à température ambiante ($D_{insol}$) ;
dans lequel le film comprend :

(A) un homopolymère de propylène ou un polypropylène aléatoire, dans lequel la teneur d'une unité dérivée d'éthylène ou d'$\alpha$-oléfine est de 8 % molaire ou moins, l'homopolymère de propyléne ou le polypropylène aléatoire étant préparé avec un catalyseur Ziegler-Natta ou un catalyseur métallocène ; et

(B) un copolymère de polypropylène préparé par copolymérisation de propylène, d'éthylène et d'une $\alpha$-oléfine en $C_4$ à $C_{10}$ en présence d'un catalyseur de polymérisation contenant un composé métallocène représenté par la formule [I] ci-dessous :

[Formule I]

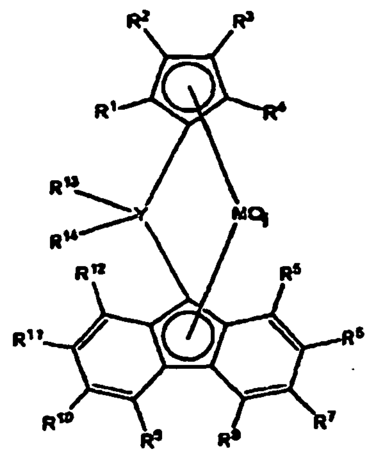

(Dans la formule générale [I], $R^1$, $R^2$, $R^3$, $R^4$, $R^5$, $R^6$, $R^7$, $R^8$, $R^9$, $R^{10}$, $R^{11}$, $R^{12}$, $R^{13}$, et $R^{14}$ peuvent être identiques ou différents les uns des autres et sont choisis chacun parmi un atome d'hydrogène, des groupes hydrocarbonés, et des groupes contenant du silicium. M est un métal de transition du groupe 4, Y est un atome de carbone ou de silicium, Q est choisi parmi des atomes halogènes, des groupes hydrocarbonés, des ligands anioniques, et des ligands neutres capables de coordination via une paire célibataire et peuvent être identiques ou une combinaison de groupes différents, et j est un nombre entier allant de 1 à 4) ;
dans lequel le composant soluble dans du n-décane à température ambiante ($D_{sol}$) est composé de 50 à 80 % molaire d'unité dérivée de propylène ($S_p$), de 10 à 45 % molaire d'unité dérivée d'éthylène ($S_E$), et de 2,0 à 15 % molaire d'unité dérivée d'une $\alpha$-oléfine ayant de 4 à 10 atomes de carbone ($S_\alpha$), à condition que $S_p + S_E + S_\alpha$ = 100 % molaire.

2. Film monocouche à base de polypropylène selon la revendication 1, dans lequel le composant soluble dans du n-décane à température ambiante ($D_{sol}$) présente une viscosité intrinsèque allant de 2,0 à 4,0 dl/g.

3. Film monocouche à base de polypropylène selon l'une quelconque des revendications 1 ou 2, dans lequel le film est formé au moyen d'un procédé de gonflage ou d'extrusion.

4. Film multicouche comprenant une couche de base et une couche extérieure sur au moins une surface de la couche de base, la couche de base comprenant le film monocouche à base de polypropylène selon l'une quelconque des revendications 1 à 3, la couche extérieure comprenant une résine à base de polyoléfine.

5. Contenant alimentaire comprenant le film à base de polypropylène selon l'une quelconque des revendications 1 à 4.

6. Contenant médical comprenant le film à base de polypropylène selon l'une quelconque des revendications 1 à 4.

7. Contenant alimentaire selon la revendication 5 qui est un contenant alimentaire pouvant être utilisé pour une stérilisation à haute température.

8. Contenant médical selon la revendication 6 qui est un contenant médical pouvant être utilisé pour une stérilisation à haute température.

9. Procédé de production d'un emballage alimentaire stérilisable, comprenant le conditionnement d'un aliment dans le contenant alimentaire selon la revendication 5 ou 7 et la stérilisation de l'aliment à haute température.

10. Procédé de production d'un emballage médical, comprenant le conditionnement d'un médicament dans le contenant médical selon la revendication 6 ou 8 et la stérilisation du médicament à haute température.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H09216640 A
- JP 2005053131 A
- JP 2004244044 A
- JP 11286584 A
- WO 2005019283 A


### Non-patent literature cited in the description


- *J. Polym. Sci.,* 1970, vol. 8, 1803
- *Makromol. Chem.,* 1976, vol. 177, 213